# EUROPÄISCHE PATENTSCHRIFT

(11) **EP 3 189 926 B1**
(45) Veröffentlichungstag und Bekanntmachung des Hinweises auf die Patenterteilung: **02.05.2018**
(21) Anmeldenummer: 17152950.6
(22) Anmeldetag: 01.02.2012
(51) Int. Cl.: B23K 26/38, B23K 26/03

(54) **VORRICHTUNG UND VERFAHREN ZUR ÜBERWACHUNG UND INSBESONDERE ZUR REGELUNG EINES LASERSCHNEIDPROZESSES**
DEVICE AND METHOD FOR MONITORING, AND IN PARTICULAR FOR CONTROLLING, A LASER CUTTING PROCESS
MACHINE ET METHODE POUR OBSERVER, ET EN PARTICULIER, CONTROLER UN PROCEDE DE COUPE AU LASER

(30) Priorität: 07.02.2011 DE 102011003717
(43) Veröffentlichungstag der Anmeldung: 12.07.2017
(62) Teilanmeldung aus: 12703051.8
(73) Patentinhaber: TRUMPF Werkzeugmaschinen GmbH + Co. KG, 71254 Ditzingen (DE)
(72) Erfinder: Hesse, Tim, 71254 Ditzingen (DE); Schindhelm, David, 70499 Stuttgart (DE)
(74) Vertreter: Kohler Schmid Möbus Patentanwälte

(56) Entgegenhaltungen:
- WO-A1-2010/057661
- DE-A1- 10 256 262
- DE-A1-102008 030 374
- DE-A1-102008 053 397

## Beschreibung

Die vorliegende Erfindung betrifft eine Vorrichtung zur Überwachung und insbesondere zur Regelung eines Laserschneidprozesses an einem Werkstück. Eine derartige Vorrichtung und ein derartiges Verfahren sind aus der WO 2010/057661 A1, die dem Oberbegriff der Ansprüchen 1 und 2 zugrunde liegt, bereits bekannt. Eine derartige Vorrichtung ist beispielsweise aus der DE 10 2005 024 085 A1 bekannt. Zur Überwachung eines Laserbearbeitungsprozesses weist die dort beschriebene Vorrichtung unter anderem eine Kamera und eine Abbildungseinrichtung auf, die den zu beobachtenden Bereich aus der Wechselwirkungszone bzw. dem Wechselwirkungsbereich zwischen Laserstrahl und Werkstück auf der Kamera abbildet. Die Ausgangssignale der Kamera werden einer Auswerteschaltung, die sowohl die Signale der Kamera als auch die Signale eines strahlungsempfindlichen Empfängers verarbeitet, zugeführt und dienen der Charakterisierung des Verlaufs des Laserbearbeitungsvorgangs. Der strahlungsempfindliche Empfänger und die Kamera können hierbei verschiedene spektrale Bereiche erfassen. Über die zur Charakterisierung dienenden Merkmale sowie deren spezifische Auswertung werden keine näheren Angaben gemacht.

Aus der WO 91/04828 ist ebenfalls eine Überwachungseinrichtung bekannt geworden, bei der eine am Laserbearbeitungskopf koaxial zur optischen Achse eines in Richtung Werkstück geführten Laserstrahls angeordnete Kamera zur Fokuslagenermittlung während eines Laserschneidprozesses genutzt wird. Die Kamera detektiert hierbei eine Wechselwirkungszone zwischen Laserstrahl und Werkstück und es wird von der Breite der Wechselwirkungszone auf die Fokuslage bzw. auf den Abstand zwischen Laserbearbeitungskopf und Werkstück geschlossen.

Aus der DE 10 2008 051 459 A1 ist eine weitere derartige Überwachungseinrichtung bekannt, die insbesondere zur Kantendetektion bei der schichtweisen Bearbeitung von Körpern mittels Laserstrahlung Anwendung findet. Die Vorrichtung umfasst einen abbildenden Detektor zur Weitergabe eines in Graustufen gewandelten oder farbechten/farbcodierten digitalen Abbildes an ein Datenverarbeitungssystem.

Die DE 43 36 136 C2 beschreibt ein Verfahren zur Laserbearbeitung, bei dem am Werkstück reflektiertes Laserlicht zusammen mit erzeugtem Sekundärlicht zu einem Laseroszillator zurückgelangt und dort mit Hilfe eines Spiegels ein Teil des Laserlichts und des Sekundärlichts abgetrennt wird. Das Sekundärlicht wird durch einen Lichtsensor separat von dem Laserlichtanteil erfasst und aus dem restlichen Sekundärlichtanteil ein Steuersignal zum Steuern der Laserbearbeitung abgeleitet. Bei einem Ausführungsbeispiel wird die Oberfläche des Werkstücks bestrahlt und die durch eine Düsenöffnung tretende, reflektierte Strahlung detektiert, um einen Schneidpfad bzw. einen Schneidpunkt beim Laserschneiden zu bestimmen. Die Position des Schneidpunkts wird mit der Düsenmitte verglichen, um den Laserschneidprozess so zu regeln, dass die Position des Schneidpunkts mit der Düsenmitte übereinstimmt. Auch wird anhand der Beobachtung der Düsenöffnung die Deformation bzw. ein Verstopfen der Düsenöffnung bestimmt.

Weiterhin ist betreffend einer Düsenaußermittigkeit aus der EP 1 728 581 A1 eine Vorrichtung und ein Verfahren zur Ausrichtung eines Laserstrahls zur Düsenmitte bekannt, bei der bzw. bei dem jeweils ein Bild einer ausgeleuchteten Düse und eines fokussierten Laserstrahls aufgenommen und über eine Bildauswerteeinheit zueinander ins Verhältnis gesetzt werden.

Weiterhin ist zur Erkennung von Materialabbrand aus der JP 07116885 die Überwachung der Ausprägung der Schneidfront ("red heat region") bekannt. Dehnt sich diese aus, wird an Stelle von Sauerstoff als Schneidgas auf ein Inertgas umgeschaltet. Die JP 11320149 offenbart zu demselben Zweck bzw. zur Unterscheidung zwischen einer korrekten und einer nicht korrekten Bearbeitung eine Bewertung anhand eines Vergleichs aufgenommener Lichtsignale. In der DE 101 29 751 wird zur Erkennung von Materialabbrand mit Hilfe von Infrarot-Temperaturmesseinrichtungen die Temperatur des Werkstücks in Schnittnähe überwacht und mit einer Temperaturgrenze verglichen.

Anhand des beispielhaft angeführten Stands der Technik wird deutlich, dass die Erfassung und Auswertung einer Vielzahl von die Qualität des Laserschneidprozesses bestimmenden Charakteristika aufgrund einer auf verschiedenen Prinzipien der Erfassung und Auswertung beruhenden Vorrichtungen und Verfahren sehr komplex ist. Dies bezieht sich sowohl auf den Aufbau der Vorrichtung selbst als auch auf die Signalverarbeitung.

Über die oben beschriebenen Vorrichtungen und die dazugehörigen Verfahren zur Auswertung der erfassten Prozessbilder ergibt sich jedoch kein vollständiges Bild, das zur Charakterisierung des gesamten Laserschneidprozesses geeignet wäre. Insbesondere die Schnittqualität selbst wird unzureichend abgebildet und eine Regelung erfolgt nicht vollumfänglich über den gesamten Prozessverlauf. Unter dem gesamten Prozessverlauf wird in diesem Zusammenhang nicht nur der Schneidvorgang als solcher verstanden, sondern es können von dem Prozessverlauf sowohl der Einstechvorgang als auch mehrere aufeinander folgende Laser-Schnitte im Rahmen einer Prozessfolge umfasst sein.

### Aufgabe der Erfindung

Der Erfindung liegt die Aufgabe zugrunde, eine Vorrichtung und ein Verfahren zur Prozessüberwachung und insbesondere zur Prozessregelung bereitzustellen, die bzw. das die serielle oder parallele Erfassung und Auswertung einer großen Anzahl von Merkmalen ermöglicht, die den Laserschneidprozess charakterisieren.

### Gegenatand der Erfindung

Diese Aufgabe wird erfindungsgemäß durch eine Vorrichtung gemäß Anspruch 1 gelöst. Zur Überwachung des Laserschneidprozesses wird vorgeschlagen, ein (Ab-)bild eines Ausschnitts (d.h. eines überwachten Bereichs) des Werkstücks aufzunehmen, der typischer Weise die Wechselwirkungszone zwischen dem Laserstrahl und dem Werkstück bei einem Einstechvorgang oder einem Schneidvorgang, d.h. bei einer Relativbewegung zwischen Laserstrahl und Werkstück, sowie einen auszubildenden bzw. bereits ausgebildeten Schnittspalt umfassen kann. Die Auswerteeinheit kann anhand des aufgenommenen Bildes zwei oder mehr Materialbegrenzungen detektieren und anhand einer geometrischen Beziehung zwischen den Materialbegrenzungen mindestens eine charakteristische Kenngröße des Schneidprozesses ermitteln. Zusätzlich oder alternativ kann bei geeigneter Wahl des detektierten Wellenlängenbereichs z.B. im NIR-Bereich, ein Wärmebild bzw. ein Prozesseigenleuchten des überwachten Bereichs, insbesondere der Wechselwirkungszone, aufgenommen werden und die Auswerteeinrichtung kann anhand des Wärmebildes bzw. des Prozesseigenleuchtens mindestens eine charakteristische Kenngröße des Laserschneidprozesses ermitteln. Eine Detektion des Prozessleuchtens ist auch mit Hilfe von UV-Strahlung möglich, wobei in diesem Fall in der Regel die von einem Plasma ausgehende Strahlung detektiert wird. Insbesondere können bei der Vorrichtung die charakteristischen Kenngrößen mit Hilfe ein- und derselben Erfassungs- und Auswertelogik ermittelt werden, so dass der Aufbau der Vorrichtung sowie die Durchführung des Verfahrens vereinfacht werden. Die Auswerteeinrichtung ist hierbei ausgebildet bzw. programmiert, anhand der von der Erfassungseinrichtung gelieferten Daten die charakteristischen Kenngrößen zu ermitteln bzw. zu berechnen.
Bei der Vorrichtung können somit anhand von wenigen durch die Erfassungseinheit erfassbaren, prozessbedingten Geometriemerkmalen bzw. der Wechselwirkungszone mit Hilfe der Auswerteeinheit eine Vielzahl von für die Prozessüberwachung und/oder Regelung heranzuziehenden Größen bzw. Prozessmerkmale ermittelt werden. Die von der Auswerteeinheit gelieferten Kenngrößen können dabei über eine Bewertung, die sowohl in der Auswerteeinheit selbst als auch in einer dieser nachgelagerten Logikeinheit (z.B. einer Regeleinrichtung) erfolgen kann, für die Regelung des Laserbearbeitungsprozesses herangezogen werden.
Als charakteristische Kenngrößen können beispielsweise ermittelt werden: Kraterbildung während des Einstechvorgangs, Spaltbreite, Schnittabriss und Materialabbrand (self-burning) während des Schneidprozesses, Schnittqualität (Gratbildung) beim Schneidprozess, sowie Störeinflüsse z.B. durch unzureichenden Düsenabstand und nicht prozesssynchrone Zu- und/oder Abschaltung des Laserstrahls. Zu diesen qualitätsbestimmenden charakteristischen Kenngrößen für die Prozessüberwachung und/oder -regelung zählt auch der Schneidfrontwinkel. Die Ermittlung der oben genannten Kenngrößen wird nachfolgend im Einzelnen beschrieben. Die Auswerteeinrichtung ist ausgebildet, eine Schneidfrontoberkante einer dem einfallenden Laserstrahl zugewandten Werkstückoberfläche und eine Schneidfrontunterkante einer dem einfallenden Laserstrahl abgewandten Werkstückoberfläche als Materialbegrenzungen zu detektieren und daraus unter Berücksichtigung der Dicke des Werkstücks als charakteristische Kenngröße einen Schneidfrontwinkel des Laserschneidprozesses zu ermitteln. Der Schneidfrontwinkel bei einem Laserschneidprozess hängt von mehreren Schneidparametern ab, insbesondere von der Vorschub- bzw. Schnittgeschwindigkeit. Weicht der Schneidfrontwinkel von einem Sollwert bzw. einem Sollbereich ab, kann dies auf einen Schneidfehler hindeuten, der durch geeignete Maßnahmen, z.B. eine Anpassung der Schnittgeschwindigkeit, korrigiert werden kann.

Ein weiterer Aspekt der Erfindung betrifft ein Verfahren der eingangs genannten Art, welches als weitere Schritte umfasst: Ermitteln mindestens einer charakteristischen Kenngröße des Laserschneidprazesses, insbesondere einer Schnittqualität, anhand einer geometrischen Beziehung zwischen mindestens zwei der detektierten Materialbegrenzungen und/oder anhand des Wechselwirkungsbereichs. Bei dem Verfahren zur Überwachung eines Laserschneidprozesses können insbesondere die weiter oben im Zusammenhang mit der Vorrichtung bzw. mit der Auswerteeinrichtung beschriebenen Ausführungsformen bzw. Weiterbildungen als weitere Verfahrensschritte durchgeführt werden, worauf im Folgenden zur Vereinfachung nicht näher eingegangen Selbstverständlich wird auch bei dem Verfahren der Schneidfrontwinkel als charakteristische Kenngröße des Laserschneidprozesses ermittelt. Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden, wie in den beigefügten Ansprüchen definiert wird. Es zeigen:
- Fig. 1: eine schematische Darstellung einer Ausführungsform einer erfindungsgemäßen Vorrichtung zur Überwachung und zur Regelung eines Laserschneidprozesses mit einer Bilderfassungseinheit,
- Fig. 2: eine Darstellung eines mit der Bilderfassungseinheit aufgenommenen Bildes des Werkstücks, anhand dessen mehrere charakteristische Kenngrößen des Schneidprozesses ermittelt werden,
- Fig. 3: eine Darstellung eines Bildes des Werkstücks, anhand dessen ein Schnittende an einer Blechkante des Werkstücks erkannt wird,
- Fig. 4: eine Darstellung eines Bildes des Werkstücks, anhand dessen ein Schnittende an einer bereits geschnittenen Kontur erkannt wird,
- Fig. 5: eine weitere Darstellung eines Bildes des Werkstücks, anhand dessen ein Schnittbeginn erkannt wird,
- Fig. 6: eine Darstellung eines Bildes des Werkstücks bei einem Einstechvorgang,
- Fign. 7a-c: Darstellungen eines Wärmebildes des überwachten Werkstückbereichs beim Schmelzschneiden und bei Vorliegen eines Qualitätsschnitts (Fig. 7a), eines Krümelgrats (Fig. 7b) und eines Bartgrats (Fig. 7c), sowie
- Fig. 8: eine Darstellung eines Wärmebildes beim Brennschneiden bei Vorliegen eines Qualitätsschnitts.

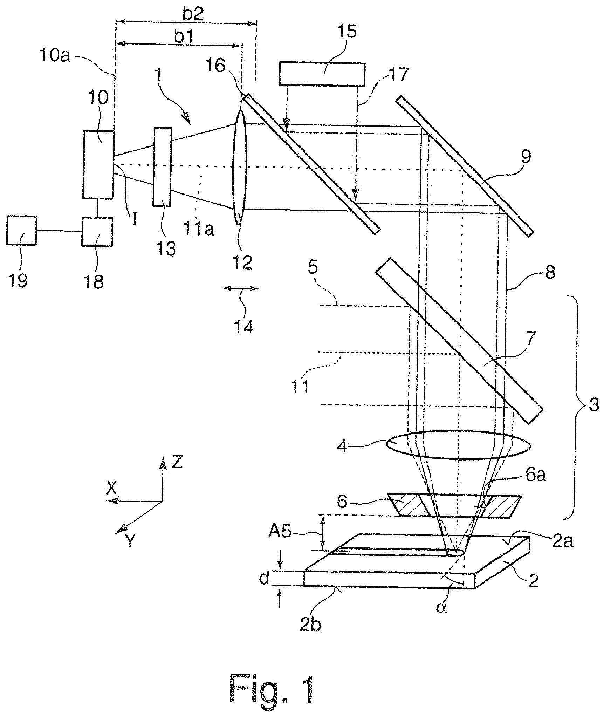

**Fig. 1** zeigt einen beispielhaften Aufbau einer Vorrichtung 1 zur Prozessüberwachung und -regelung eines Laserschneidprozesses an einem Werkstück 2 mittels einer CO2-Lasebearbeitungsanlage, von der in Fig. 1 nur eine Bearbeitungseinheit 3 (Teil eines Laser-Bearbeitungskopfes) mit einer Fokussierlinse 4 aus Zinkselenid zur Fokussierung eines CO2-Laserstrahls 5 der Laserbearbeitungsanlage, einer Schneidgas-Düse 6 sowie mit einem Umlenkspiegel 7 dargestellt ist. Im vorliegenden Fall ist der Umlenkspiegel 7 teildurchlässig ausgebildet und bildet daher ein eintrittsseitiges Bauteil der Vorrichtung 1 zur Prozessüberwachung.

Der Umlenkspiegel 7 reflektiert den einfallenden CO2-Laserstrahl 5 (mit einer Wellenlänge von ca. 10 µm) und transmittiert für die Prozessüberwachung relevante, vom Werkstück 2 reflektierte sowie von der Wechselwirkungszone emittierte Strahlung 8 in einem Wellenlängebereich, der im vorliegenden Beispiel zwischen ca. 550 nm und 2000 nm liegt. Alternativ zum teildurchlässigen Umlenkspiegel 7 kann auch ein Scraperspiegel oder ein Lochspiegel eingesetzt werden, um die Prozessstrahlung 8 der Vorrichtung 1 zuzuführen. Allerdings führt die Verwendung eines Scraper-Spiegels typischer Weise zum Ausblenden eines Teils der Prozessstrahlung sowie zur Begrenzung des Rohstrahldurchmessers. Die Verwendung eines Lochspiegels führt in der Regel zu Beugungseffekten der Prozessstrahlung sowie zu einer starken Beeinflussung der (CO2-)Laserstrahlung.

In der Vorrichtung 1 ist hinter dem teildurchlässigen Spiegel 7 ein weiterer Umlenkspiegel 9 angeordnet, welcher die Prozessstrahlung 8 auf eine geometrisch hochauflösende Kamera 10 als Bilderfassungseinheit umlenkt. Bei der Kamera 10 kann es sich um eine Hochgeschwindigkeitskamera handeln, die koaxial zur Laserstrahlachse 11 bzw. zur Verlängerung der Laserstrahlachse 11a und somit richtungsunabhängig angeordnet ist. Prinzipiell ergibt sich die Möglichkeit der Aufnahme des Bildes durch die Kamera 10 auch im Auflichtverfahren, d.h. im VIS-Wellenlängebereich, ggf. auch im NIR-Wellenlängebereich, sofern eine zusätzliche Beleuchtungsquelle vorgesehen ist, die im NIR-Bereich strahlt, sowie alternativ die Aufnahme des Prozesseigenleuchtens in den Wellenlängenbereichen UV und NIR/IR.

Für eine verbesserte Abbildung ist im vorliegenden Beispiel zwischen dem teildurchlässigen Spiegel 7 und der Kamera 10 ein in Fig. 1 als Linse dargestelltes abbildendes, fokussierendes optisches System 12 vorgesehen, welches die für die Prozessüberwachung relevante Strahlung 8 auf die Kamera 10 fokussiert. Durch eine asphärische Ausbildung des abbildenden optischen Systems bzw. der Linse 12 zur Fokussierung können sphärische Aberrationen bei der Abbildung verhindert oder zumindest verringert werden.

Bei dem in Fig. 1 gezeigten Beispiel ist ein Filter 13 vor der Kamera 10 von Vorteil, wenn weitere Strahlungs- bzw. Wellenlängenanteile von der Erfassung mit der Kamera 10 ausgeschlossen werden sollen. Der Filter 13 kann z.B. als schmalbandiger Bandpassfilter mit geringer Halbwertsbreite ausgebildet sein, um chromatische Aberrationen zu vermeiden bzw. zu reduzieren. Die Lage der Kamera 10 sowie des im vorliegenden Beispiel vorhandenen abbildenden optischen Elementes 12 und/oder des Filters 13 entlang der Laserstrahlachse 11 ist über ein dem Fachmann bekanntes, zur Vereinfachung durch einen Doppelpfeil dargestelltes Positioniersystem 14 einstell- sowie bei Bedarf veränderbar.

Die Kamera 10 wird im vorliegenden Beispiel im Auflichtverfahren betrieben, d.h. es ist eine zusätzliche Beleuchtungsquelle 15 oberhalb des Werkstücks 2 vorgesehen, welche über einen weiteren teildurchlässigen Spiegel 16 Beleuchtungsstrahlung 17 koaxial zur Laserstrahlachse 11 in den Strahlengang einkoppelt. Als zusätzliche Beleuchtungsquelle 15 können Laserdioden, bspw. mit einer Wellenlänge von 658 nm, oder Diodenlaser, bspw. mit einer Wellenlänge von 808 nm, vorgesehen werden, die wie in Fig. 1 gezeigt koaxial, aber auch off-axis zur Laserstrahlachse 11 angeordnet werden können. Die zusätzliche Beleuchtungsquelle 15 kann beispielsweise auch außerhalb (insbesondere neben) der Bearbeitungseinheit 3 angeordnet und auf das Werkstück 2 gerichtet sein; alternativ kann die Beleuchtungsquelle 15 innerhalb der Bearbeitungseinheit 3 angeordnet sein, jedoch nicht koaxial zum Laserstrahl 5 auf das Werkstück 2 gerichtet sein.

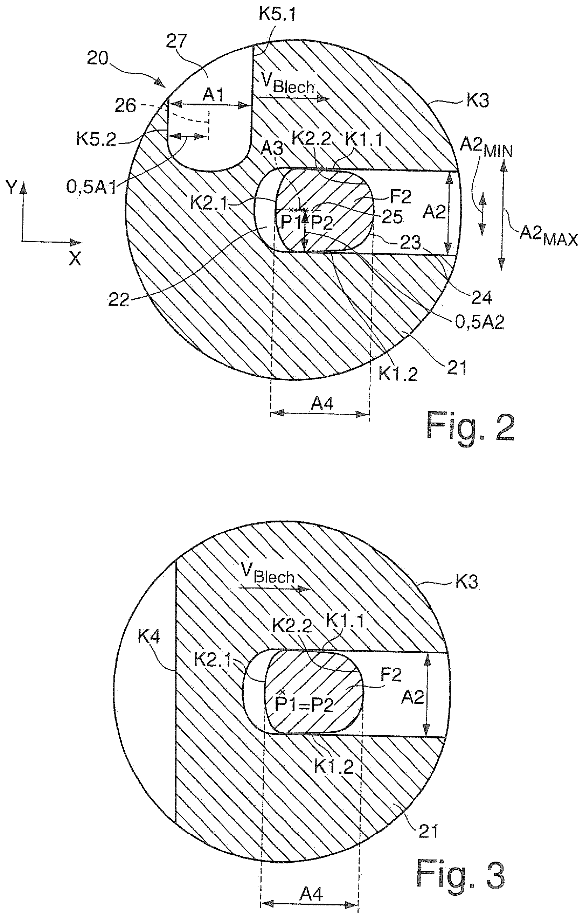

Wie in **Fig. 2** gezeigt ist, nimmt die Kamera 10 ein hochaufgelöstes Bild 20 eines zu überwachenden Bereichs 21 (Ausschnitt) des Werkstücks 2 auf. Das Bild 20 wird durch die kreisförmige Innenkontur 6a (vgl. Fig. 1) der Düse 6 begrenzt.

Bei dem in Fig. 2 dargestellten Beispiel zeigt das Bild 20 den zu überwachenden Bereich 21 während eines Laser-Schmelzschneidprozesses, bei dem das Werkstück 2 in einer Vorschubrichtung V_{BLECH} relativ zur Düse 6 bzw. zur Bearbeitungseinheit 3 (Laserbearbeitungskopf) bewegt wird. Alternativ oder zusätzlich kann die Relativbewegung zwischen dem Werkstück 2 und der Düse 6 bzw. der Bearbeitungseinheit 3 (Laserbearbeitungskopf) durch die Bewegung der Düse 6 bzw. der Bearbeitungseinheit 3 ausgeführt werden. Beim Schmelzschneidprozess bildet sich ein Wechselwirkungsbereich 22, 23 zwischen dem Laserstrahl 5 und dem Werkstück 2 aus, welcher eine Wärmevorlaufzone 22 sowie eine Schneidfront 23 umfasst, an die sich in Vorschubrichtung V_{BLECH} ein Schnittspalt 24 (im Folgenden auch als Schnittfuge bezeichnet) anschließt.

Eine in Fig. 1 gezeigte Auswerteeinrichtung 18 dient zur Auswertung des Bildes 20 und insbesondere zur Detektion von Materialbegrenzungen innerhalb des überwachten Bereichs 21 an der Oberseite 2a und der Unterseite 2b des Werkstücks 2. Die Auswerteeinrichtung 18 steht mit einer ebenfalls in Fig. 1 gezeigten Regeleinrichtung 19 in signaltechnischer Verbindung, welche den Laserschneidprozess steuert bzw. regelt, und zwar in Abhängigkeit von durch die Auswerteeinrichtung 18 ermittelten charakteristischen Kenngrößen des Laserschneidprozesses.

Unter anderem können anhand des Kamerabildes 20 folgende Merkmale eines Laserschneidprozesses von der Auswerteeinheit 18 ermittelt werden, um charakteristische Kenngrößen zu ermitteln: Materialbegrenzungen an der Werkstückober- und -unterseite 2a, 2b, insbesondere Kanten des Werkstücks, Düsenrand und Düsenzentrum der Laserbearbeitungsdüse, geometrische Abmessungen der Schnittfuge (nicht nur gegenüberliegende Schnittkanten, sondern auch der Bereich der Wechselwirkungszone, z.B. der Schneidfront), Lage der Schnittfuge relativ zum Düsenrand/-zentrum, Lage bereits geschnittener Bereiche relativ zur aktuellen Schneidposition, etc. Die Detektion dieser und weiterer Merkmale zur Ermittlung von charakteristischen Kenngrößen des Laserbearbeitungsprozesses werden nachfolgend näher beschrieben.

Bei dem in Fig. 2 gezeigten Beispiel wird als charakteristische Kenngröße die Spaltbreite A2 der Schnittfuge 24 auf Grundlage des hochauflösenden Kamerabildes 20 ermittelt, indem die Auswerteeinheit 18 die Schnittkanten K1.1 und K1.2 der Schnittfuge 24 detektiert und deren Abstand bestimmt, welcher mit der Schnittspaltbreite A2 übereinstimmt. Bei einem Laserschneidprozess verlaufen die Schnittkanten K1.1, K1.2 in der Regel (nahezu) parallel, so dass die Schnittspaltbreite A2 insbesondere bei einem Gutschnitt (nahezu) konstant ist.

Die Auswerteeinheit 18 selbst oder eine ihr nachgelagerte Logik, z.B. die Regeleinrichtung 19, kann über den Vergleich mit einer zuvor definierten und zum Vergleich hinterlegten Sollschnittbreite ermitteln, ob beispielsweise bei Unterschreitung einer minimalen Schnittspaltbreite A2_{MIN} ein Schnittabriss, d.h. ein vollständiges Fehlen einer Schnittfuge, oder bei Überschreitung einer maximalen Schnittspaltbreite A2_{MAX} ein Materialabbrand (self-burning) bzw. im Falle eines Sauerstoff-Brennschnitts von Baustahl Auswaschungen (Kolkungen) vorliegt bzw. vorliegen.

Ein Materialbrand kann alternativ oder zusätzlich auch über die (zeitliche) Änderung der Schnittspaltbreite A2 - sowohl im Hinblick auf eine absolute Änderung als auch über die Änderungsgeschwindigkeit - festgestellt werden. Mehrere Auswerteverfahren zur Spaltbreite können auch parallel eingesetzt werden. Ein Materialabbrand führt zu einer Aufweitung der Schnittkanten K1.1, K1.2 sowie der Schneidfront 23, welche ggf. so groß werden kann, dass der Schnittspalt 24 breiter wird als die Düsenöffnung 6a bzw. die Düsenkontur K3, so dass die Schnittkanten K1.1, K1.2 im überwachten Bereich 21 nicht mehr erkennbar sind. Hierbei verändert sich das in Fig. 2 gezeigte Bild 20 des Schnittspalts 24 mit den nahezu parallelen Schnittkanten K1.1, K1.2 zu einer quasi halbkreisförmigen Schneidfront bzw. der Ausschnitt 21 des Werkstücks 2 zeigt nur noch einen der Schneidfront entsprechenden Radius. Beim Materialabbrand endet die Schneidfront auch nicht direkt mit dem Laserstrahl 5, sondern ist diesem vorgelagert, da in diesem Fall das Schneidgas den Verbrennungsprozess dominiert.

Alternativ oder zusätzlich zum Unterschreiten des minimalen Abstands A2_{MIN} kann ein Schnittabriss anhand einer Fläche F2 detektiert werden, welche zwischen einer vorderen Kante K2.1 und einer hinteren Kante K2.2 der detektierten Schneidfront 23 gebildet wird. Zu diesem Zweck wird die Fläche F2, welche der Projektion der Schneidfront 23 in die XY-Ebene entspricht, mit einer Referenzfläche ins Verhältnis gesetzt. Ein Schnittabriss liegt vor, wenn die Fläche F2 die Größe der Referenzfläche erreicht, das Verhältnis Referenzfläche / F2 also gleich Eins ist. Die Referenzfläche entspricht hierbei der Fläche der projizierten Schneidfront bei einem Gutschnitt, d.h. bei einem Schnitt mit guter Schneidqualität. Ein Schnittabriss kann zudem detektiert werden, wenn die Helligkeit der Schneidfront 23 größer ist als bei einem Referenz-Gutschnitt, wobei das Leuchten kontinuierlich und/oder sporadisch auftreten kann und wobei die Leuchtfläche in etwa gleich oder größer der Schnittfugenbreite A2 ist.

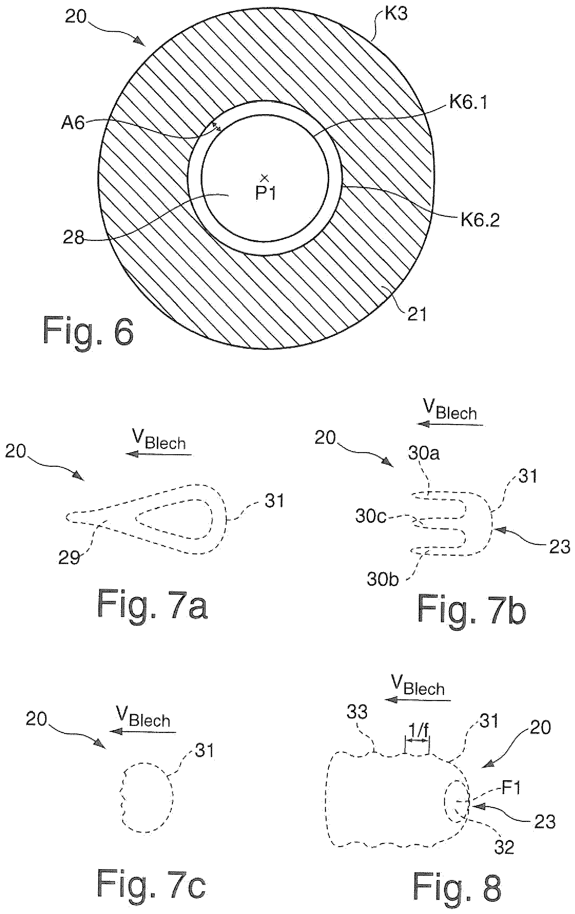

Anhand eines Bildes 20, wie es in Fig. 2 dargestellt ist, können auch Kolkungen beim Sauerstoff-Brennschneiden von Baustahl erkannt werden, wenn diese von oben (d.h. von der Werkstückoberseite 2a) beginnen, und zwar anhand einer unperiodischen Zunahme der Schnittspaltbreite A2 oder anhand des (zumindest zeitweisen) Verlusts der Parallelität zwischen den Schnittspalt-Kanten K1.1, K1.2. Beim Beobachten eines Prozessleuchtens, wie dies nachfolgend in Zusammenhang mit Fign. 7a-c und Fig. 8 beschrieben wird, können Kolkungen auch über einen Helligkeitsabfall sowie durch das Auftreten von Blitzen, d.h. kurzen und intensiven Erhöhungen der Helligkeit im Bereich der Schneidfront 23, und zwar typischer Weise punktuell an der Schneidfront außen, im Bereich des Übergangs zu den parallelen Schnittkanten K1.1, K1.2, detektiert werden.

Neben der Ermittlung eines Schnittabrisses oder Materialabbrandes bzw. von Kolkungen kann über die Schnittfugenbreite A2 auch der Lage des Werkzeugmittelpunkts P2 bestimmt werden, der im Folgenden auch als TCP (Tool Center Point) bezeichnet wird. Dessen Position in Y-Richtung ist durch eine Mittellinie 25 definiert, die parallel und mittig zu den gegenüberliegenden Schnittkanten K1.1, K1.2 der Schnittfuge 24 verläuft. Die Lage des TCPs P2 kann zusätzlich auch in X-Richtung bestimmt werden, und zwar als Mittellinie zwischen den Kanten K5.1, K5.2 einer weiteren Schnittfuge 27, welcher beim in Fig. 2 gezeigten Beispiel in einem vorhergehenden Laserschneidprozess (mit Vorschubrichtung in Y-Richtung) erzeugt wurde. Anhand der beiden Schnittfugen 24, 27 kann der Werkzeugmittelpunkt P2 in der XY-Ebene (parallel zur Werkstückoberfläche) eindeutig definiert werden. Es versteht sich, dass prinzipiell an Stelle der gezeigten senkrecht zur Schnittfuge 24 verlaufenden Schnittfuge 27 jede andere zur Schnittfuge 24 nicht parallel verlaufende Schnittfuge zur Bestimmung des Werkzeugmittelpunktres P2 in der XY-Ebene herangezogen werden kann.

Der so bestimmte Werkzeugmittelpunkt P2 kann zur Einstellung und Überwachung der Düsenposition der vom Laserstrahl 5 durchlaufenen Schneiddüse 6 herangezogen werden, und zwar durch Bezugnahme auf die Düsenmitte P1. Die Düsenmitte P1 bestimmt sich dabei aus der über die Bilderfassungseinheit 10 erfassten kreisförmigen Düsen(innen)kontur K3, als deren Kreis-Mittelpunkt die Düsenmitte P1 bestimmt wird. Auf diese Weise kann ein Abstand A3 zwischen der Düsenmitte P1 und dem Werkzeugmittelpunkt P2 ermittelt werden. Insbesondere kann beim Erkennen einer Abweichung zwischen Düsenmitte P1 und Werkzeugmittelpunkt P2 mit Hilfe der Regelungseinrichtung 19 in den Laserschneidprozess eingegriffen werden, um die Position des Laserstrahls 5 relativ zur Düse 6 zu korrigieren, so dass der Werkzeugmittelpunkt P2 mit der Düsenmitte P1 übereinstimmt.

Bei der Detektion der Innenkontur K3 der Düse 6 kann insbesondere anhand der geometrischen Form der Schneiddüse auch auf eine mechanische Verletzung derselben geschlossen werden, und zwar indem Abweichungen von der (typischer Weise kreisrunden) Soll-Kontur der Düse 6 erkannt werden. Die Verletzungen können u.a. durch eine Kollision der Düse 6 mit dem Werkstück 2, mit (nicht gezeigten) Auflagestegen oder anderen Störkonturen oder durch eine starke Laserstrahlaußermittigkeit (bezogen auf die Düsenmitte P1) erzeugt werden, bei welcher der Laserstrahl 5 den Düseninnenrand 6a tangiert und dadurch lokal aufschmilzt. Durch eine solche Beschädigung, die durch den Maschinenbediener meist nicht zu erkennen ist, kann sich die Schneidgasdynamik und somit die Schnittqualität nachteilig verändern.
Anhand der Darstellungen von Fig. 2 und Fig. 1 wird nachfolgend die Ermittlung des Schneidfrontwinkels bei einem Laserschneidprozess gemäß Anspruch 1 und 2 erläutert. Um den Schneidfrontwinkel zu bestimmen, wird zunächst ein Abstand A4 zwischen der Schneidfrontoberkante K2.1 und der Schneidfrontunterkante K2.2 bestimmt, welche wie oben beschrieben mit Hilfe der Auswerteeinrichtung 18 als Materialbegrenzungen detektiert werden. Der in Fig. 1 gezeigte Schneidfrontwinkel α ergibt sich durch die trigonometrische Funktion α = arctan (A4/d) aus dem Abstand A4 zwischen Schneidfrontoberkante K2.1 und -unterkante K2.2 gemessen entlang der Spaltmitte 25 sowie aus der Dicke d des Werkstücks 2.
Mit Hilfe der Vorrichtung 1 von Fig. 1 ist es auch möglich, einen Abstand A5 zwischen der Schneidgasdüse 6 und dem Werkstück 2, genauer gesagt der Werkstückoberseite 2a, zu bestimmen. Zu diesem Zweck wird die der Bilderfassungseinheit 10 vorgeschaltete Linse 12 mit Hilfe des Positioniersystems 14 entlang der optischen Achse 11 verschoben, so dass ein Abstand zwischen einer Bildebene 10a der Bilderfassungseinrichtung 10 zur Aufnahme des Bildes 20 und der Linse 12 sich verändert. Bei einem ersten Abstand b1 zwischen Bildebene 10a und Linse 12 liegt das Werkstück 2 bzw. dessen Oberseite 2a innerhalb des Bereichs der Tiefenschärfe der Bilderfassungseinrichtung 10, so dass mindestens eine Materialbegrenzung des Werkstücks 2, z.B. die Schnittkanten K1.1, K1.2 detektiert werden können. Bei einem zweiten Abstand b2 liegt die Düse 6 im Bereich der Tiefenschärfe der Bilderfassungseinrichtung 10, so dass die Auswerteeinrichtung 18 eine Innenkontur K3 der Düse 6 als Materialbegrenzung detektiert. Anhand der Differenz b1 - b2 zwischen den beiden Abständen b1, b2, bei denen die Düsen-Innenkontur K3 bzw. die Schnittkanten K1.1, K1.2 von der Auswerteeinrichtung 18 detektiert werden, kann der Abstand A5 zwischen der Düse 6 und dem Werkstück 2 berechnet werden.

In **Fig. 3** ist eine Schnittende-Erkennung bei Erreichen bzw. Überfahren einer Blechkante K4 am Außenrand des Werkstücks 2 gezeigt. Die Position der detektierten Blechkante K4 wird in diesem Fall zum Werkzeugmittelpunkt P2 in Beziehung gesetzt, um einen (in Fig. 3 nicht gezeigten) Abstand zwischen dem Werkzeugmittelpunkt P2 und der Blechkante K4 zu ermitteln. Durch die Kenntnis dieses Abstands kann die Regelungseinrichtung 19 den Laserstrahl 5 abschalten, sobald dieser die Blechkante K4 erreicht, so dass ein Verletzen des getrennten Werkstücks 2 während des Herabfallens durch einen zu lange gezündeten Laserstrahl 5 vermieden wird. Applikationsspezifisch kann eine solche Abschaltung auch vor Erreichen der Blechkante durch den Werkzeugmittelpunkt P2 vorgenommen werden, und zwar sobald der Abstand zur Blechkante K4 ausreichend klein ist, um trotz der Abschaltung noch eine vollständige Trennung des Werkstücks 2 realisieren zu können.

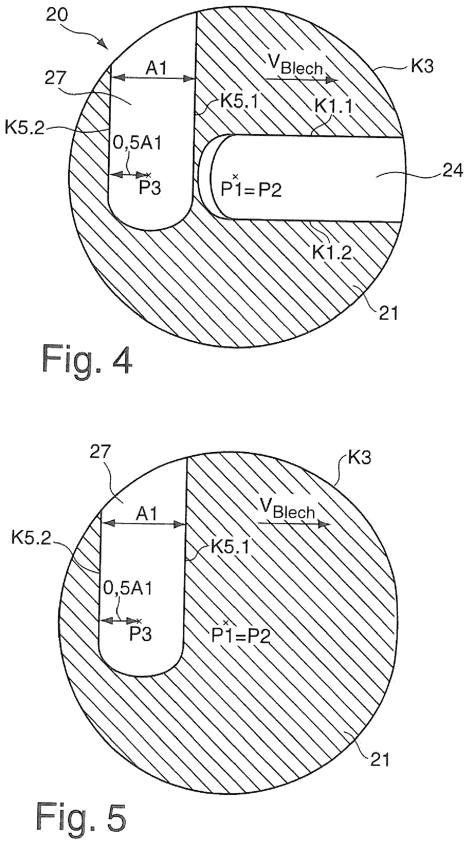

Analog zu Fig. 3 ist in **Fig. 4** eine Schnittende-Erkennung bei Erreichen einer bereits geschnittenen Kontur, d.h. einer bereits vorhandenen Schnittfuge 27, gezeigt. Die Abschaltung des Laserstrahls 5 kann analog zum Erreichen bzw. Überfahren der Blechkante K4 in Fig. 3 erfolgen, deren Rolle in dem in Fig. 4 gezeigten Bild 20 von der ersten in Richtung des Schneidprozesses weisenden Schnittkante K5.1 übernommen wird.

Alternativ kann über die Detektion der beiden bereits vorliegenden Schnittkanten K5.1, K5.2 des weiteren Schnittspalts 27 die Schnittspaltbreite A1 und daraus wiederum der Endpunkt P3 des in die Schnittfuge 27 einlaufenden Schnittspalts 24 definiert werden. Dieser Endpunkt P3 ist typischer Weise mittig, also in gleichem Abstand (0,5 A1) zu den gegenüberliegenden Schnittkanten K5.1, K5.2 angeordnet. Je nach Anwendung kann dieser Endpunkt P3 aber auch in Richtung der durch den Schnitt zuerst erreichten Schnittkante K5.1 verschoben werden, beispielsweise wenn die einlaufende Schnittfuge 24 größer als die quer zu ihr verlaufende, bereits vorhandene Schnittfuge 27. Im umgekehrten Fall, d.h. wenn die einlaufende Schnittfuge 24 kleiner ist als die quer zu ihr verlaufende Schnittfuge 27, kann eine Rückverlagerung des Endpunktes P3 ebenfalls günstig sein, solange der Laserstrahl 5 zumindest so rechtzeitig abgeschaltet wird, dass eine Verletzung der rückwärtigen Schnittkante 5.2 der weiteren Schnittfuge 27 vermieden wird.

Generell kann durch die Detektion der relativen Lage einer bereits generierten Schnittfuge 27 zu einem im Prozess befindlichen Werkstückmittelpunkt (TCP) P2 auch eine Bahnabweichung erkannt und bei Überschreitung eines Toleranzbereichs mit Hilfe der Regelungseinrichtung 19 korrigiert werden.

Der in **Fig. 5** dargestellte Fall der Erkennung des Schnittbeginns erfolgt vergleichbar zu der in den Fig. 3 und Fig. 4 beschriebenen Erkennung des Schnittendes. Im Gegensatz zur Schnittende-Erkennung wird der Laserstrahl 5 aber in Abhängigkeit des (Lage-)Verhältnisses von Werkstückmittelpunkt P2 zu quer (oder auch in einem anderen Winkel) verlaufender Schnittfuge 27 nicht ab-, sonder ein- bzw. zugeschaltet. Es versteht sich, dass die Erkennung eines Schnittbeginns an einer Blechkante K4 analog zur in Zusammenhang mit Fig. 3 beschriebenen Vorgehensweise erfolgt. Eine Schnittbeginn-Erkennung eignet sich in besonderer Weise bei der Wiederaufnahme eines Schneidprozesses nach einem Schnittabriss oder aber bei der Wiederaufnahme eines Schneidprozesses nach einer Relativbewegung zwischen Bearbeitungseinheit 3 und Werkstück 2, bspw. bedingt durch Taktzyklen, bei welchem der Laserschneidprozess prozessbedingt unterbrochen und zu einem späteren Zeitpunkt an exakt gleicher Stelle wieder gestartet/aufgenommen werden muss.

**Fig. 6** zeigt das Bild 20 eines zu überwachenden Bereichs 21 des Werkstücks 2 bei einem Einstechvorgang, bei dem ein kreisförmiges Loch 28 in das Werkstück 2 eingebracht wird. Die zwei Haupteinflussfaktoren auf den Einstechprozess, nämlich die chemische Materialzusammensetzung und die Oberflächenbeschaffenheit des Werkstücks 2 können von Hersteller zu Hersteller bzw. von Charge zu Charge variieren. Beim Einstechvorgang, insbesondere in Baustahl, z.B. bei Materialdicken ab 15 mm, können aufgrund dieser Unterschiede in den Materialeigenschaften gegebenenfalls Probleme beim Einstechvorgang auftreten. Der Einstechvorgang im dicken Baustahl wird derart gestört, dass der Laserstrahl kein schlankes Loch bohrt, sondern dass sich aufgrund der Überhitzung und der anschließend ablaufenden, exothermen Eisen-Sauerstoff-Reaktion ein kegelförmiger Krater ausbildet, dessen Kontur in Fig. 6 dargestellt ist. Die Auswerteeinrichtung 18 kann hierbei die Innenkontur K6.1 des Lochs 28 sowie den äußeren Kraterrand K6.2 detektieren, so dass eine sich anbahnende Kraterentstehung detektiert werden und die Regeleinrichtung 19 geeignete Gegenmaßnahmen, z.B. eine Abkühlpause, einleiten kann. Das Einleiten von Gegenmaßnahmen kann z.B. bei der Überschreitung eines Grenzwerts für den Abstand A6 zwischen innerer Begrenzung K6.1 und äußerer Begrenzung K6.2 (Kraterrand) des Einstechlochs 28 erfolgen. Es versteht sich, dass auch auf eine Kraterbildung geschlossen werden kann, wenn die Außenkontur K6.2 des Einstechlochs 28 so groß wird, dass diese aus dem von der Kamera 10 durch die Düse 6 hindurch aufgenommenen Bereich 21 verschwindet.

**Fign. 7a****-c** zeigen jeweils ein Bild 20 des Prozesseigenleuchtens im NIR/IR-Bereich eines Wechselwirkungsbereichs 31 bei einem Schmelzschneidprozess, welcher mit der Kamera 10 unter Verwendung eines Filters 13 aufgenommen wurde, der nur für Prozessstrahlung 8 im (nahen) Infrarotbereich durchlässig war, wobei die gezeigten Konturen die Grenzen zwischen Bereichen unterschiedlicher Intensität der Prozessstrahlung 8 darstellen und die Konturen des Werkstücks 2 nicht zu erkennen sind. Bei der vom Bild 20 erfassten Prozess-Strahlung 8 handelt es sich um ein Eigenleuchten des Laserschneidprozesses, welche typischer Weise (zumindest teilweise) das Schmelzbad umfasst. Das Bild 20 des Prozesseigenleuchtens kann nicht unmittelbar mit einer Temperaturverteilung gleichgesetzt werden, da die gemessene Intensität I (vgl. Fig. 1) von der Temperatur T im Wesentlichen gemäß folgender Formel abhängt: I = ε * T⁴, wobei ε den Emissionsgrad (zwischen 0 und 1) bezeichnet. Da der Emissionsgrad ε im vorliegenden Fall nahe bei Null liegen kann, sind Aussagen über die Temperatur nur schwer aus der Intensitätsverteilung ableitbar. Dennoch wird nachfolgend zur Vereinfachung die gemessene Intensitätsverteilung gelegentlich auch als Wärmebild bezeichnet.

Anhand der (Wärme-)bilder 20 kann die Gratbildung bzw. deren Fehlen beim Laserschneiden und somit die Schnittqualität ermittelt werden. Fig. 7a zeigt hierbei das Bild 20 des Wechselwirkungsbereichs 31, bei dem ein Qualitätsschnitt (mit nahezu glatten Schnittkanten) erzeugt wird. Der Wechselwirkungsbereich 31 weist entlang der Vorschubrichtung V_{Blech} einen einzigen zentralen Schweif bzw. eine einzige Leuchtspur 29 auf. Bei der Beobachtung des Nachlaufs des Wechselwirkungsbereichs 31 über einen längeren Zeitraum (mehrere Sekunden) tritt zudem ein sporadisches Flackern auf. Die in Fig. 7a gezeigte Form des Wechselwirkungsbereichs 31 sowie das sporadische Flackern (d.h. die wiederkehrende Zu- und Abnahme der Helligkeit) sind auf einen homogenen Schmelzaustrieb zurückzuführen, der bei einem Qualitätsschnitt in Vorschubrichtung nach hinten und vorne pendelt. Ist kein Flackern zu erkennen, ist dies ein Hinweis auf eine Gratbildung während des Schneidprozesses (und zwar für das Vorliegen eines Bartgrats).

Fig. 7b zeigt ein Bild 20 des Wechselwirkungsbereichs 31 beim Vorliegen von Gratbildung, und zwar bei der Bildung eines so genannten Krümelgrats, bei dem im vorliegenden Beispiel zwei von der Schneidfront 23 aus nach hinten gerichtete helle Leuchtstreifen 30a, 30b an den beiden (nicht gezeigten) Schnittkanten sowie ein weiterer Leuchtstreifen 30c zu erkennen ist, der in der Mitte zwischen den beiden äußeren Leuchtstreifen 30a, 30b verläuft. Die Leuchtstreifen 30a-c sind hierbei verhältnismäßig lang, was auf das Auftreten einer azimutalen Schmelzströmung mit einer Gratentstehung eines Krümelgrats weit hinten im Nachlauf hindeutet.

Das in Fig. 7c dargestellte Bild 20 des Wechselwirkungsbereichs 31 deutet ebenfalls auf eine Gratbildung hin, und zwar auf einen so genannten Bartgrat. In diesem Fall ist kein Schweif bzw. Leuchtstreifen zu erkennen, da das komplette Schmelzvolumen den Bartgrat speist. Auch kommt es zu keinem Funkenflug direkt unterhalb der Schneidgas-Düse 6, so dass in diesem Fall kein Flackern auftritt; vielmehr verläuft der Laserschneidprozess ohne merkliche Schwankungen in der detektierten Intensität der Prozessstrahlung 8.

In **Fig. 8** ist schließlich ein Wärmebild 20 bzw. ein Bild des Prozesseigenleuchtens im NIR/IR-Bereich gezeigt, wie es bei einem Baustahl-Brennschneidprozess (unter Verwendung von Sauerstoff als Schneidgas) auftritt. Bei einem solchen Prozess weisen die oberen Teile der Schnittkanten periodisch wiederkehrende Rillen auf, welche im Wärmebild 20 als Riefen 33 zu erkennen sind. Im Bereich der Schneidfront 23 tritt am Bild 20 des Wechselwirkungsbereichs 31 beim Vorliegen eines Gutschnitts, d.h. ohne Gratbildung, ein lokales Minimum 32 mit einer gegenüber der Intensität in der Umgebung verminderten Strahlungsintensität auf. Die Größe der Fläche F1 des Intensitäts-Minimums 32 (Strahlungssenke) kann überwacht werden und für den Fall, dass diese zu stark abnimmt, einer Gratbildung entgegengewirkt werden, indem die Prozessparameter geeignet verändert werden.

Anhand des Wärmebildes von Fig. 8 kann auch das Bevorstehen eines Materialabbrandes detektiert werden. Hierbei kann ausgenutzt werden, dass die Frequenz f der Riefen 33 im Wärmebild 20 des Wechselwirkungsbereichs 31 im Bereich derjenigen Schnittkante abnimmt, an welcher ein Materialabbrand bevorsteht, so dass geeignete Gegenmaßnahmen ergriffen werden können, um das Auftreten des Materialabbrandes zu unterbinden. Die Riefen 33 bzw. eine Abnahme der Frequenz f der Riefen kann alternativ auch im VIS-Bereich detektiert werden.

Auch kann ein bereits entstandener und/oder gerade bevorstehender Materialabbrand anhand eines Helligkeitsanstiegs der Gesamtintensität des Wärmebildes 20 detektiert werden, da die durch die Düse 6 beobachtete Leuchtfläche bei einem Materialabbrand zunimmt. Zusätzlich oder alternativ kann ein Materialabbrand auch anhand einer erhöhten Schwankung des gesamten Helligkeitswertes gegenüber einem herkömmlichen Schneidprozess detektiert werden.

Die Wärmebilder 20 können selbstverständlich mit den (bei Wellenlängen im sichtbaren Bereich) detektierten Materialbegrenzungen (Konturen des Werkstücks 2) verglichen werden, um die Ermittlung von für den Laserschneidprozess charakteristischen Kenngrößen zu verbessern. Hierbei kann insbesondere bei Werkstücken aus Edelstahl ein Schnittabriss detektiert werden, wenn die Breite der im Wärmebild erfassten leuchtenden Fläche, welche im Wesentlichen der Breite der Schneidfront entspricht, größer ist als die Breite A2 des Schnittspalts senkrecht zur Vorschubrichtung V_{Blech} (vgl. Fig. 2).

Sowohl die Erfassung der Materialbegrenzungen als auch die Erfassung des Wärmebildes des Wechselwirkungsbereichs wird bei der in Fig. 1 gezeigten Vorrichtung mit Hilfe einer einzigen Kamera als Bilderfassungseinrichtung durchgeführt. Zu diesem Zweck wird der Wellenlängen-Filter 13 geeignet durchgestimmt oder in den Strahlengang des Prozesslichts 8 hinein- und wieder heraus bewegt. Es versteht sich, dass zur parallelen Detektion von Materialbegrenzungen und Wärmebild die Bilderfassungseinrichtung 10 auch weitere Kameras bzw. Detektoren aufweisen kann.

## Patentansprüche

1. Vorrichtung (1) zur Überwachung und insbesondere zur Regelung eines Laserschneidprozesses an einem Werkstück (2), umfassend:
eine Bilderfassungseinrichtung (10) zur Aufnahme eines Bildes (20) eines zu überwachenden Bereichs (21) des Werkstücks (2), der insbesondere einen Wechselwirkungsbereich (22, 23, 31) eines Laserstrahls (5) mit dem Werkstück (2) umfasst, sowie
eine Auswerteeinrichtung (18) zur Detektion von Materialbegrenzungen (K1.1 bis K6.1, K1.2 bis K6.2, K3; K4), insbesondere von Kanten (K1.1 bis K6.1, K1.2 bis K6.2, K4) des Werkstücks (2), anhand des aufgenommenen Bildes (20),
wobei die Auswerteeinrichtung (18) ausgelegt ist, anhand einer geometrischen Beziehung zwischen mindestens zwei der detektierten Materialbegrenzungen (K1.1 bis K6.1, K1.2 bis K6.2, K4) und/oder anhand des Wechselwirkungsbereichs (22, 23, 31) mindestens eine charakteristische Kenngröße, insbesondere eine Schnittqualität, des Laserschneidprozesses zu ermitteln,
**dadurch gekennzeichnet,**
**dass** die Auswerteeinrichtung (18) ausgebildet ist, eine Schneidfrontoberkante (K2.1) einer dem einfallenden Laserstrahl (5) zugewandten Werkstückoberfläche (2a) und eine Schneidfrontunterkante (K2.2) einer dem einfallenden Laserstrahl (5) abgewandten Werkstückoberfläche (2b) als Materialbegrenzungen zu detektieren und daraus unter Berücksichtigung der Dicke (d) des Werkstücks (2) als charakteristische Kenngröße einen Schneidfrontwinkel (α) des Laserschneidprozesses zu ermitteln.

2. Verfahren zur Überwachung und insbesondere zur Regelung eines Laserschneidprozesses an einem Werkstück (2), umfassend:
Aufnehmen eines Bildes (20) eines zu überwachenden Bereichs (21) des Werkstücks (2), der insbesondere einen Wechselwirkungsbereich (22, 23, 31) eines Laserstrahls (5) mit dem Werkstück (2) umfasst, sowie Auswerten des aufgenommenen Bildes (20) zur Detektion von Materialbegrenzungen (K1.1 bis K6.1, K1.2 bis K6.2, K3; K4), insbesondere von Kanten (K1.1 bis K6.1, K1.2 bis K6.2, K4), des Werkstücks (2),
Ermitteln mindestens einer charakteristischen Kenngröße des Laserschneidprozesses, insbesondere einer Schnittqualität, anhand einer geometrischen Beziehung zwischen mindestens zwei der detektierten Materialbegrenzungen (K1.1 bis K6.1, K1.2 bis K6.2, K4) und/oder anhand des Wechselwirkungsbereichs (22, 23, 31),
**dadurch gekennzeichnet,**
**dass** eine Schneidfrontoberkante (K2.1) einer dem einfallenden Laserstrahl (5) zugewandten Werkstückoberfläche (2a) und eine Schneidfrontunterkante (K2.2) einer dem einfallenden Laserstrahl (5) abgewandten Werkstückoberfläche (2b) als Materialbegrenzungen detektiert werden und dass daraus unter Berücksichtigung der Dicke (d) des Werkstücks (2) als charakteristische Kenngröße ein Schneidfrontwinkel (α) des Laserschneidprozesses ermittelt wird.

## Claims

1. A device (1) for monitoring and in particular for controlling a laser cutting process on a workpiece (2), comprising:
an image capturing apparatus (10) for capturing an image (20) of a region (21) of the workpiece (2) to be monitored, which in particular comprises a region of interaction (22, 23, 31) of a laser beam (5) with the workpiece (2), and
an evaluation apparatus (18) for detecting material boundaries (K1.1 to K6.1, K1.2 to K6.2, K3; K4), in particular edges (K1.1 to K6.1, K1.2 to K6.2, K4) of the workpiece (2), by using the captured image (20), wherein the evaluation apparatus (18) is designed to determine at least one characteristic value, in particular a cut quality, of the laser cutting process by using a geometric relationship between at least two of the detected material boundaries (K1.1 to K6.1, K1.2 to K6.2, K4) and/or by using the region of interaction (22, 23, 31),
**characterized in that** the evaluation apparatus (18) is designed to detect a cutting front upper edge (K2.1) of a workpiece surface (2a) facing the incident laser beam (5) and a cutting front lower edge (K2.2) of a workpiece surface (2b) facing away from the incident laser beam (5) as material boundaries and, from these, by taking into account the thickness (d) of the workpiece (2), to determine a cutting front angle (α) of the laser cutting process as characteristic value.

2. A method for monitoring and in particular for controlling a laser cutting process on a workpiece (2), comprising:
capturing an image (20) of a region (21) of the workpiece (2) which is to be monitored, which in particular comprises a region of interaction (22, 23, 31) of a laser beam (5) with the workpiece (2), and
evaluating the captured image (20) in order to detect material boundaries (K1.1 to K6.1, K1.2 to K6.2, K3; K4), in particular edges (K1.1 to K6.1, K1.2 to K6.2, K4), of the workpiece (2),
determining at least one characteristic value of the laser cutting process, in particular a cut quality, by using a geometric relationship between at least two of the detected material boundaries (K1.1 to K6.1, K1.2 to K6.2, K4) and/or by using the region of interaction (22, 23, 31), **characterized in that** a cutting front upper edge (K2.1) of a workpiece surface (2a) facing the incident laser beam (5) and a cutting front lower edge (K2.2) of a workpiece surface (2b) facing away from the incident laser beam (5) are detected as material boundaries and, from these, by taking into account the thickness (d) of the workpiece (2), a cutting front angle (α) of the laser cutting process is determined as characteristic value.

## Revendications

1. Appareil (1) dévolu à la surveillance et, en particulier, à la régulation d'un processus de découpe au laser sur une pièce (2) à usiner, comprenant :
un dispositif (10) de capture d'images, affecté à l'enregistrement d'une image (20) d'une région (21) de la pièce (2) qui doit être surveillée et inclut, en particulier, une zone (22, 23, 31) d'interaction d'un rayon laser (5) avec ladite pièce (2),
ainsi qu'un dispositif d'évaluation (18) affecté à la détection, à l'appui de l'image (20) enregistrée, de délimitations matérielles (K1.1 à K6.1, K1.2 à K6.2, K3 ; K4), notamment d'arêtes (K1.1 à K6.1, K1.2 à K6.2, K4) de la pièce (2),
ledit dispositif d'évaluation (18) étant conçu pour spécifier au moins une grandeur caractéristique, en particulier une qualité de coupe du processus de découpe au laser, sur la base d'une relation géométrique entre au moins deux, parmi les délimitations matérielles (K1.1 à K6.1, K1.2 à K6.2, K4) détectées, et/ou à l'appui de la zone d'interaction (22, 23, 31),
**caractérisé par le fait**
**que** le dispositif d'évaluation (18) est conçu pour détecter, en tant que délimitations matérielles, une arête supérieure (K2.1) du front de coupe sur une surface (2a) de la pièce qui est tournée vers le rayon laser (5) incident, et une arête inférieure (K2.2) du front de coupe sur une surface (2b) de ladite pièce qui est tournée à l'opposé dudit rayon laser (5) incident, et pour spécifier sur cette base en tant que grandeur caractéristique, avec prise en compte de l'épaisseur (d) de ladite pièce (2), un angle (α) du front de coupe du processus de découpe au laser.

2. Procédé destiné à la surveillance et, en particulier, à la régulation d'un processus de découpe au laser sur une pièce (2) à usiner, consistant :
à enregistrer une image (20) d'une région (21) de la pièce (2) qui doit être surveillée et inclut, en particulier, une zone (22, 23, 31) d'interaction d'un rayon laser (5) avec ladite pièce (2),
à évaluer l'image (20) enregistrée, en vue de détecter des délimitations matérielles (K1.1 à K6.1, K1.2 à K6.2, K3 ; K4), notamment des arêtes (K1.1 à K6.1, K1.2 à K6.2, K4) de la pièce (2),
ainsi qu'à spécifier au moins une grandeur caractéristique du processus de découpe au laser, en particulier une qualité de coupe, sur la base d'une relation géométrique entre au moins deux, parmi les délimitations matérielles (K1.1 à K6.1, K1.2 à K6.2, K4) détectées, et/ou à l'appui de la zone d'interaction (22, 23, 31),
**caractérisé par**
la détection, en tant que délimitations matérielles, d'une arête supérieure (K2.1) du front de coupe sur une surface (2a) de la pièce qui est tournée vers le rayon laser (5) incident, et d'une arête inférieure (K2.2) du front de coupe sur une surface (2b) de ladite pièce qui est tournée à l'opposé dudit rayon laser (5) incident ; et par le fait que, sur cette base, un angle (α) du front de coupe du processus de découpe au laser est spécifié, en tant que grandeur caractéristique, avec prise en compte de l'épaisseur (d) de ladite pièce (2).
